# EUROPÄISCHE PATENTSCHRIFT

(11) **EP 0 463 342 B1**
(45) Veröffentlichungstag und Bekanntmachung des Hinweises auf die Patenterteilung: **24.08.1994**
(21) Anmeldenummer: 91107741.0
(22) Anmeldetag: 14.05.1991
(51) Int. Cl.: B01D 46/10, F24D 19/06, F24F 3/16, B03C 3/30

(54) **Variierbare Luftfilteranordnung für Konvektions- und Ventilationsluftströme**
Variable air filter arrangement for convection and ventilation air currents
Arrangement de filtration d'air variable pour courants d'air de convection et de ventilation

(30) Priorität: 06.06.1990 DE 4018046
(43) Veröffentlichungstag der Anmeldung: 02.01.1992
(73) Patentinhaber: ICLEEN ENTWICKLUNGS- UND VERTRIEBSANSTALT FÜR UMWELTPRODUKTE, FL-9494 Schaan (LI)
(72) Erfinder: Hammes, Klaus P., CH-9403 Goldach (CH)
(74) Vertreter: Riebling, Peter, Dr.-Ing.

(56) Entgegenhaltungen:
- FR-A- 1 452 150
- GB-A- 329 767
- GB-A- 790 598
- US-A- 4 518 402

## Beschreibung

Gegenstand der vorliegenden Erfindung ist eine variierbare Luftfilteranordnung für Konvektions- und Ventilationsluftströme, wobei Filterelemente zur Reinigung der Raumluft in die Luftströmung eingebracht werden.

Aus der Patentschrift GB-A-392 767 ist bekannt, auf Konvektionsheizkörpern zur Reinigung der Raumluft entsprechende Filterelemente anzubringen. Hierbei ist es üblich, daß man auf deren Oberseite des Heizkörpers einen Rahmen mit Filter oder einen Filter selbständig anbringt, in der eine Filtermatte eingelegt ist. Es ist auch bekannt, diese Filterplatte unmittelbar mit dem Heizkörper zu verbinden. Die von dem Heizkörper erzeugte Warmluft strömt nun zum Teil durch das Filtermaterial dieses Filters hindurch, und es werden dadurch Staubteilchen, Haare und andere Fremdstoffe, die mit der Luft transportiert werden, insbesondere auch Aerosole, abgeschieden.

Nachteil dieser bekannten Filterkonzeption ist es, daß nur ein geringer Teilstrom der vom Heizkörper erzeugten Konvektionsluft durch den Filter hindurchtritt. Versuche haben ergeben, daß solche Anordnungen den Luftdurchtritt entweder behindern bzw. Teile des Luftstromes nicht erfassen können, da der Filter nur teilweise vom Luftstrom durchdrungen wird.

Versuche des Anmelders haben im übrigen gezeigt, daß eine Reinigungswirkung dadurch stattfindet, daß die durch das Filter hindurchtretende relativ trockene Luft eine elektrostatische Aufladung des Filtermaterials ausführt. Danach kommt es zu einer Ionisierung einerseits des Filtermaterials und zu einer gegensätzlichen Ionisierung der hindurchtretenden Staubteilchen und ihrer Aerosole, so daß es zu einer Anziehung dieser Teilchen im Filtermaterial und zu einer Rückhaltewirkung kommt.

Nun hat sich herausgestellt, daß bei den bekannten Filtermaterialien und der bekannten direkten Befestigung der Filterplatten auf dem Heizkörper diese elektrostatische Aufladung nur relativ schwach ist, weil sie aufgrund des direkten Kontaktes elektrisch abgeleitet wird.

Derselbe nachteilige Effekt, nämlich eine fehlende elektrostatische Aufladung, wurde im übrigen auch festgestellt, wenn man derartige Filterelemente in die Ausströmöffnungen entsprechender Klimakonditioniergeräte einbaut, wonach ebenfalls nur eine geringfügige elektrostatische Aufladung und dementsprechend nur ein reduzierter Filterrückhaltegrad erreicht wird; außerdem ist bei einer solchen Anordnung der Filterwiderstand höher.

Der vorliegenden Erfindung liegt deshalb die Aufgabe zugrunde, eine Luftfilteranordnung der eingangs genannten Art so weiterzubilden, daß es im Hinblick auf Durchsatzleistung, Effektivität und Variabilität, eine verbesserte Filterwirkung im Bereich von Konvektions- und Ventilationsluftströmen zeigt.

Zur Lösung der gestellten Aufgabe ist die Erfindung dadurch gekennzeichnet, daß im Abstand vor bzw. über der lufterzeugenden Fläche bzw. dem lufterzeugenden Querschnitt Filterelemente angeordnet sind, deren Fläche mindestens so groß ist, wie der lufterzeugende Querschnitt der luftabgebenden Fläche.

Mit der gegebenen technischen Lehre werden mehrere wesentliche Vorteile gegenüber dem Stand der Technik erzielt.

Zunächst soll definiert werden, was mit "lufterzeugender Fläche" verstanden werden soll.

Bei einem Konvektionsheizkörper ist es bekannt, daß die Heizungsluft nicht nur senkrecht nach oben aus dem Konvektionsheizkörper austritt, sondern daß auch Nebenluftströme gebildet werden, so daß ein wesentlicher Teil der Heizungsluft auch vor und hinter dem Konvektionsheizkörper nach oben austreten.

Es ergibt sich somit zwischen der Wand, vor der der Konvektionsheizkörper montiert ist und dem Konvektionsheizkörper selbst ein Schacht, durch den ein wesentlicher Teil der Konvektionsheizluft nach oben austritt.

In analoger Weise tritt auch ein wesentlicher Teil der Konvektionsheizluft an der Vorderseite des Heizkörpers direkt nach oben aus, so daß die luftabgebende Fläche eines Konvektionsheizkörpers wesentlich größer ist als die nach oben gerichtete Stirnfläche dieses Heizkörpers selbst.

Erfindungsgemäss ist nun für diesen Anwendungsfall vorgesehen, daß Luftfilterelemente im gesamten Bereich dieser luftabgebenden Fläche des Konvektionsheizkörpers angeordnet sind und in einer bevorzugten Ausführungsform ist es vorgesehen, daß die Fläche dieser Luftfilterelemente noch größer gewählt ist als die luftabgebende Fläche des Heizkörpers selbst.

In der Praxis heisst dies, daß Luftfilterelemente verwendet werden, die im Abstand über einem Konvektionsheizkörper angeordnet sind und den Heizkörper mindestens nach hinten und vorne überragen, um auch die Nebenströme zu erfassen. Wichtig hierbei ist, daß die Luftfilterelemente unmittelbar an der Wand befestigt sind, um auch den zwischen der Wand und der hinteren Fläche des Heizkörpers entstehenden Luftstrom zu erfassen.

Der Begriff "luftabgebende Fläche" ist also somit für einen Konvektionsheizkörper definiert.

Für andere Heizkörper gelten analoge Erläuterungen.

Bei Strahlungsheizkörpern gelten dieselben Bedingungen, d.h. der vom Strahlungsheizkörper erzeugte Wärmeblock wird teilweise als Konvektionsluftstrom abgegeben, und im Bereich dieses Konvektionsluftstromes werden nun erfindungsgemäss die Filterelemente angeordnet, wobei stets wichtig ist, daß ein Körperkontakt der Filterflächen und der Filterhalteelemente mit dem Heizkörper selbst auf jeden Fall vermieden werden.

Bei dem vorliegenden Erfindungsgegenstand ist es besonders vorteilhaft, daß eine Reinigung der Luft in Innenräumen ohne Einsatz von Fremdenergie erfolgt.

Es bedarf keines Stromanschlusses oder eines sonstigen Eingriffs vonseiten des Benutzers.

Dieselben Verhältnisse gelten im übrigen für die Filterung der Luft von Luft-Konditionieranlagen, insbesondere von Kälteklimaanlagen und von Befeuchtungsgeräten und -Anlagen.

Bei diesen Geräten sind ebenfalls Ausströmöffnungen für den Luftstrom definiert.

Wichtig ist nun, daß erfindungsgemäss die Filterelemente im Abstand vor und in Überdeckung der luftabgebenden Fläche angeordnet sind. D.h. hier soll wiederum ein Körperkontakt zwischen den Luftfilterelementen und der luftabgebenden Fläche selbst vermieden werden.

Es hat sich nämlich gezeigt, daß bei allen drei vorher erwähnten Anwendungsarten der erfindungsgemässen Luftfilterelemente die elektrostatische Aufladung stärker ist, wenn ein Körperkontakt zwischen den Filterelementen und der luftabgebenden Körper vermieden wird. Es kommt daher nicht zur Ableitung der elektrostatischen Aufladung, weil die erfindungsgemässen Luftfilterelemente vollständig isoliert für sich allein an einer Befestigungsfläche angeordnet sind und keinerlei elektrische Verbindung mit der luftabgebenden Fläche, z.B. dem Heizkörper, dem Ausströmgitter für die Konditionieranlage oder dem Bestrahlungsheizkörper hat.

Für den Fall, daß eine elektrisch leitfähige Montageschiene verwendet wird, ist es vorgesehen, daß diese Montageschiene entsprechend zur Befestigungsfläche elektrisch isoliert angebracht wird.

Bei der Erfindung ist es wesentlich, daß hinsichtlich der Anordnung der Filterelemente im Konvektionsluftstrom eine Überdeckung mit geringerem Luftwiderstand und im weiteren bei Veränderung der Filterneigung in Verbindung mit Zusatzeinrichtungen eine Überdeckung mit höherem Luftwiderstand regulierbar ist. Eine Überdeckung mit geringerem Luftwiderstand liebt dann vor, wenn das Filterelement im Winkel nach oben hin abragend im Luftstrom angeordnet ist, wobei der aufsteigende Luftstrom nur teilweise das Filter durchsetzt und ansonsten entlang dem Filter vorbeistreicht, in dem Durchdringungsfiltration bzw. Filteroberflächenadsoption die Luft behandelt.

Die Maximalüberdeckung des Luftstromes wird dann erreicht, wenn das Filterelement nach unten hin in Richtung gegen den aufsteigenden Luftstrom geneigt ist und weiterhin z.B. ein zusätzlicher Luftschacht am Filterelement angeordnet ist, in welchem sich die aufsteigende Luft fängt.

Eine solche Ansammlung von aufsteigender Luft wird auch dann erreicht, wenn das Filterelement nach unten weisende Ansätze aufweist, welche die lufterzeugende Fläche überdecken oder das Filterelement in konvexer Abbiegung den aufsteigenden Luftstrom übergreift und hierbei zusätzlich ein Luftpolster für die Filtration gehalten wird.

Wichtig ist in allen Ausführungsbeispielen, daß ein gewisser Abstand A der Filterfläche zum Luftstrom gewählt wird, wodurch hier in spezieller Weise eine elektrostatische Aufladung des Filtermediums verursacht wird, insbesondere weil der Filter einer Reibung des aufsteigenden Luftstromes unterliegt.

In Verbindung mit der elektrostatischen Aufladung wird demnach ein Kontakt der Filterfläche zum Heizkörper oder zum Lüftungselement vermieden, wobei gewährleistet wird, daß die entstandene Aufladung nicht abgeleitet wird.

Um die Verweildauer des Luftstromes im Bereich des Filtermediums im Sinne der Durchdringung zu erhöhen, sind - wie bereits angegeben - diverse Stellmittel des Filtermediums zum Luftstrom möglich. Um ein frühzeitiges Ausweichen des Luftstromes zu vermeiden, ist es auch vorgesehen, eine Luftschachtblende im Filterrahmen einzubringen.

In Verbindung mit dem Abstand des Filterelements vom Heizkörper bzw. dem Stellwinkel des Filterelementes kann demnach zunächst ein geringer Strömungswiderstand eingestellt werden. Um bestimmte Partikelgrößen erfassen zu können, kann der Abstand verringert bzw. vergrößert werden bzw. der Stellwinkel, wodurch das Filterelement näher zur lufterzeugenden Fläche gelangt und weiterhin können Luftschachtblenden oder dergleichen vorgesehen sein. Um einen maximalen Luftstrom zu erfassen, ist eine Tiefen- und Längenbestimmung des Luftfiltersystems vorgesehen in Verbindung mit diversen Bautiefen-Module des Filterelements und mit dem Stellwinkel bzw. der Neigung sowie dem Einsatz von zusätzlichen Luftschachtblenden (Leitblenden).

Die Erfindung hat den Vorteil, daß der gesamte Konvektions- bzw. Einströmbereich für die Filterung genutzt werden kann, aber trotzdem die Heizung bzw. Lüftungsfunktion systemweise berücksichtigt werden kann. In Verbindung mit der abgestuften Filteranordnung bzw. der Überdeckung der Luftströmung sowohl im Tiefen- als auch im Längenbereich als auch in der vertikalen Anordnung wird eine gezielte Ausfilterung der Luft erreicht. In dieser Hinsicht ergibt sich eine Vielzahl von Anwendungsmöglichkeiten, insbesondere
1. bei Heizkörpern und Konvektoren diverser Ausführung,
2. bei Aircondition-Fenstereinheiten,
3. bei Lüftungsöffnungen an Decken und Wänden,
4. bei Computern am Lufteintritt für die Kühlventilation,
5. bei elektrisch betriebenen Wandheizelementen (Heizkörpern und Elektrokonvektoren),
6. bei sämtlichen wärme-erzeugenden Geräten, wie Kühlschränken, Fernsehgeräten und Monitore,
7. bei Lufteinlaßöffnungen, wie Fenster, Schiebetüren oder dgl.

Die Filterelemente können hierbei im wesentlichen in gerader Anordnung reihenweise nebeneinander angeordnet sein, wobei unterschiedliche Filterqualitäten in regelmässiger oder unregelmässiger Reihenfolge für unterschiedliche Aufgabenstellungen und Bedingungen angeordnet werden können.

Im weiteren können die Filterelemente auch in überlagerter Anordnung ausgebildet sein, wobei mit Durchströmöffnungen die Filterelemente in unterschiedlicher Höhe voneinander angeordnet sind.

Es wird nochmals wiederholt, daß es erfindungswesentlich ist, die Filterelemente im Abstand über oder vor der luftabgebenden Fläche anzuordnen. Die mit Stäuben und Aerosolen verunreinigten Luftmassen bzw. Luft mit Restverschmutzung treffen nämlich mit einer ganz bestimmten Geschwindigkeit auf das Filterelement auf. Bei einem Konvektionsheizkörper hängt diese Geschwindigkeit von der Temperatur des Heizkörpers und von anderen konstruktiven Gegebenheiten ab. Je weiter man nun den Abstand zwischen der luftabgebenden Fläche des Heizkörpers und dem erfindungsgemässen Filterelement wählt, desto niedriger ist die Luftgeschwindigkeit, mit der die Stäube und Aerosole auf die Filterfläche auftreffen. Es besteht ein Zusammenhang zwischen der Partikelgröße von Partikeln, die im Filter gefangen werden und der Luftgeschwindigkeit. Je höher die Luftgeschwindigkeit ist, desto größer ist die Wahrscheinlichkeit, daß Kleinstpartikel das Filter überwinden.

Andererseits muß die Filteranordnung jedoch so durchlässig sein, um in vertretbarem Maß nicht die sich ausbildende Konvektionsluftwalze zu stören.

Der ideale Abstand der erfindungsgemässen Luftfilterelemente von der luftabgebenden Fläche gilt im Zusammenhang mit baulichen Voraussetzungen, und von der luftabgebenden` Fläche des Heizkörpers sollte aber so bestimmt sein, daß eben die Luftgeschwindigkeit im idealen Verhältnis den Filter erreicht, um noch Kleinstpartikeln zu binden. Andererseits darf das Filtermedium nicht so weit von der luftabgebenden Fläche des Heizkörpers entfernt sein, daß keine Luft mehr oder nur wenig Luft durch das Filtermaterial mehr hindurchdringen kann. Die Erfindung wird nun anhand von mehreren Ausführungsbeispielen näher erläutert. Hierbei ergeben sich aus den Ausführungsbeispielen und ihrer Erläuterung weitere Merkmale und Vorteile der Erfindung.
- Figur 1: zeigt schematisiert in Seitenansicht einen Rippenheizkörper mit einer Luftfilteranordnung nach der vorliegenden Erfindung in drei verschiedenen Stellungen (mit und ohne Luftleitblenden).
- Figur 1a: zeigt Filterelemente mit beidseitig angesetzten Abbiegungen bzw. Ansätzen.
- Figur 1b: Zeigt die Ausführung nach Figur 1 mit zusätzlichen Luftleitblenden.
- Figur 1c: zeigt abgebogene Filterelemente mit angesetztem Luftschacht.
- Figur 2: zeigt die Anwendung einer Luftfilteranordnung nach der Erfindung in perspektivischer Seitenansicht über einen Plattenheizkörper.
- Figur 3: zeigt die Anwendung der erfindungsgemässen Luftfilteranordnung über einem Konvektor-Heizkörper.
- Figur 4: zeigt die Luftfilteranordnung schematisiert vor der Ausströmöffnung eines Nachtstromspeicherofens oder einer Luftkonditionieranlage.
- Figur 5: zeigt die gleiche Anordnung wie Figur 4 mit einer anderen Halterung des Luftfiltersystems.
- Figur 6: zeigt die Anordnung von Luftfilterelementen nach der Erfindung im Bereich einer Konvektor-Bodenheizung.
- Figur 7: zeigt die Halterung von Luftfilterelementen bei einer Fensterklimaanlage.
- Figur 8: zeigt die Halterung von Luftfilterelementen nach der Erfindung an deckenseitig angeordneten Ausströmöffnungen.

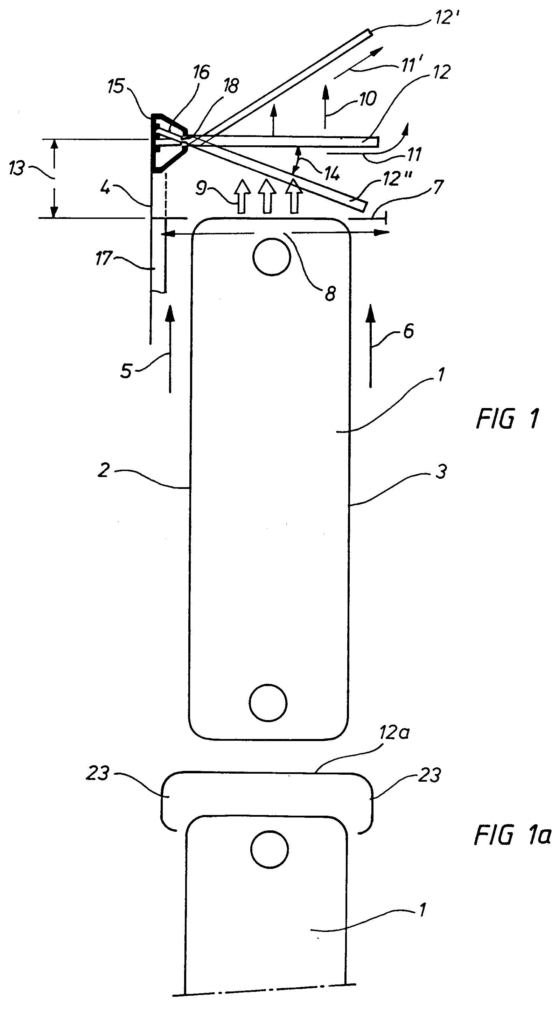

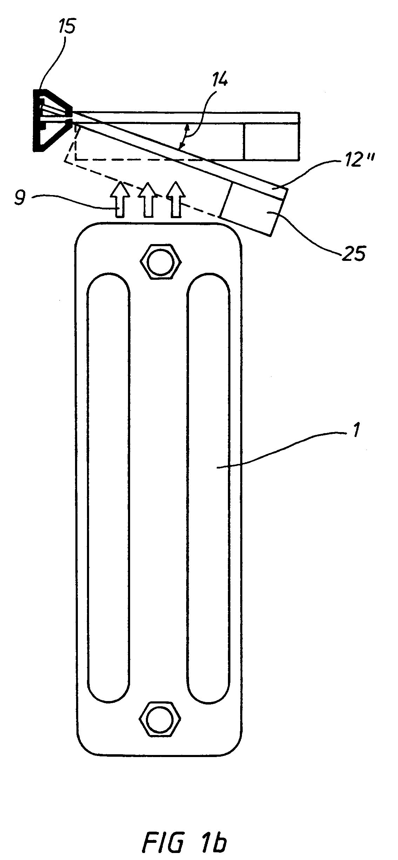

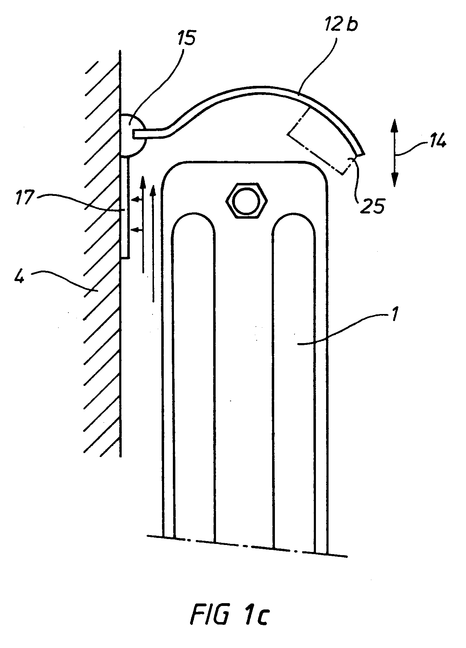

In Figur 1 ist schematisiert ein Heizkörper 1 dargestellt, der beispielsweise als Rippenheizkörper ausgebildet ist.

Dieser Heizkörper ist vor einer Befestigungsfläche 4 montiert und hat eine Rückwand 2 und eine Vorderwand 3. In an sich bekannter Weise bildet sich bei beheiztem Heizkörper 1 an der Vorderseite 3 ein Luftstrom in Pfeilrichtung 6 und an der Rückwand 2 ein Luftstrom in Pfeilrichtung 5. Diese Konvektions-Luftströme in den Pfeilrichtungen 5 und 6 laufen parallel zu dem zentral vom Heizkörper nach oben abgegebenen Luftstrom in Pfeilrichtung 9.

Alle Luftströme in den Pfeilrichtungen 5,6,9 bilden somit eine obere, luftabgebende Fläche 7, die einen Abstand 8 von der Befestigungsfläche 4 aufweist.

Wichtig ist nun, daß im Bereich dieser luftabgebenden Fläche 7 die erfindungsgemässen Filterplatten 12 in vertikalem Abstand 13 über der luftabgebenden Fläche 7 angeordnet sind. Hierdurch wird eine überlegene Filterleistung der Filterplatten 12 erreicht.
Einerseits treten die Luftströme in den Pfeilrichtungen 5 und 6 durch die Filterplatte 12 hindurch zusammen mit dem mittleren, zentralen Luftstrom in Pfeilrichtung 9. Alle Luftströme werden demgemäss mit dem Filtermedium in der Filterplatte 12 in Berührung gebracht, was früher beim Stand der Technik nicht der Fall ist.

"In Berührung bringen" heisst, daß ein Teil des Luftstromes längs des Filtermaterials in Pfeilrichtung 11 entlangströmt und ein weiterer Teil senkrecht hierzu in Pfeilrichtung 10 durch die Filterplatte hindurchtritt. Bei beiden Luftströmen in den Pfeilrichtungen 10 und 11 kommt es zu einer Abscheidung im Bereich der Filterplatte 12.

Wie eingangs bereits schon ausgeführt, lädt sich die Filterplatte 12 aufgrund der Luftreibung elektrostatisch auf, und die elektrostatische Ladung bleibt in dem Filtermedium aufrechterhalten, weil die gesamte Anordnung isolierend und elektrisch nicht leitfähig an der Befestigungsfläche 4 angeordnet ist.

Es sei noch hinzugefügt, daß über die Länge des Heizkörpers 1 hinweg gesehen sich die Filterplatten 12 erstrecken, und zwar so, daß auch eine seitliche Überdeckung des Heizkörpers 1 auf beiden Seiten möglich und spezifisch wählbar ist.

In der Darstellung nach Figur 1 sind noch zwei weitere mögliche Ausführungsformen der Stellung der erfindungsgemässen Filterplatten 12 dargestellt.

In der Stellung der Filterplatte 12' ist diese nach oben geneigt, wodurch ein größerer Volumenstrom in Pfeilrichtung 11' längs der Filterplatte 12 entlangströmt und nur ein geringerer Luftstrom in Pfeilrichtung 10 durch das Filtermaterial hindurchtritt.

Die Heizleistung des Heizkörpers wird hierdurch in geringerem Maße beeinträchtigt.

In der Stellung 12'' sind die Filterplatten nach unten in Pfeilrichtung 14 geneigt, wodurch hier ein größerer Luftstrom in Pfeilrichtung 10 durch die Filterplatten 12 hindurchtritt und ein kleinerer Luftstrom entlang der Filterplatten in Pfeilrichtung 11 abgelenkt wird.

Erfindungsgemäss ist zusätzlich für den spezifischen Fall vorgesehen, daß gemäss Figur 1a zum Einfangen des sich an der Vorderseite des Heizkörpers 1 bildenden Luftstromes in Pfeilrichtung 6 noch im wesentlichen vertikal nach unten gerichtete Ansätze 23 oder Kragen an den Filterplatten 12 vorhanden sind, um einen Luftsack oder einen Luftstau über den Filterplatten 12 zu bilden, um somit die Verweildauer des Luftstromes unterhalb der Filterplatte somit zu verbessern und den Luftstrom in Pfeilrichtung 11 zu vermindern.

Derartige Luftkragen werden teilweise eingesetzt und sind nicht zwingend lösungsnotwendig.

Die Filterplatten 12 sind jeweils in einer sich über die gesamte Länge des Heizkörpers erstreckenden Befestigungsschiene 15 verschiebbar gehaltert. Die Verschiebung erfolgt hierbei senkrecht zur Zeichenebene, wobei zusätzlich vorgesehen werden kann, daß die Filterplatten 12 in der eingezeichneten Pfeilrichtung und in Gegenrichtung hierzu schwenkbar in der Befestigungsschiene angeordnet werden.

Die Befestigungsschiene weist hierbei ein Hohlprofil 16 auf mit einer vorderen Befestigungsnut 18, durch welche die Filterplatten 12 hindurchgesteckt und dort gehaltert sind.

Die Befestigungsschiene 15 kann hierbei aus einem Metallmaterial oder einem Kunststoffmaterial bestehen. Wichtig ist lediglich, daß keine elektrische Verbindung zwischen den Filterplatten einerseits und dem Heizkörper 1 anderseits oder dem Ventilationselement andererseits vorliegen.

In Ergänzung zur vorliegenden Erfindung und in Weiterbildung ist es vorgesehen, daß an der Befestigungsfläche 4 unterhalb des Halteprofils und hinter dem Heizkörper 1 ein zusätzlicher Filterstreifen 17 angeordnet wird, der bevorzugt sich über die gesamte Länge des Heizkörpers erstreckt.
Hierdurch lässt sich die Filterwirkung durch eine zusätzliche Kontaktabscheidung erhöhen. Dies erfolgt dadurch, daß dieser Zusatzfilterstreifen 17 eine Absorptionswirkung gegenüber den vorbei geführten Luftpartikeln im Luftstrom zeigt.

Die Figur 1b zeigt, daß bei sämtlichen Ausführungen, die vorher und nachher beschrieben werden, an den Filterplatten Leitblenden 25,26 angeordnet werden können, die sich von der Ebene der Filterplatte im wesentlichen senkrecht nach unten erstrecken. Hierdurch wird ein Luftschacht 24 oder dergleichen gebildet.

Hierbei können die an den randseitig angeordneten Filterplatten befestigten Leitblenden 25 in die vordere Ecke der Leitblende herum gezogen werden und entweder die Formgebung der Leitblende 25 nach Figur 1b oder die Formgebung der Leitblende 26 in der gestrichelten Ausführungsform nach Figur 1b einnehmen.

Die an den übrigen Filterelementen angeordneten Leitblenden können entweder ebenfalls abgebogene Ecken aufweisen, so wie dies bei der Leitblende 25 in Figur 1b dargestellt ist oder sie können stirnseitig lediglich gerade ausgeführt sein.

Die Figur 1c zeigt einen Heizkörper mit darüber angeordneten Filterelementen 12b, wobei diese in konvexer bzw. abgebogener Ausführung den aufsteigenden Luftstrom überdecken. Zusätzlich ist noch ein Luftschacht 24 vorgesehen, um bei dieser Anordnung mit einer maximalen Überdeckung einen großen Teil des aufsteigenden Luftstromes einzufangen. In Figur 1b ist dargestellt, daß auch bei dieser Ausführung das Filterelement 12b in verschiedenen Stellwinkeln geneigt werden kann, um evtl. bei an sich sonst sauberer Luft einen geringeren Luftwiderstand einstellen zu können.

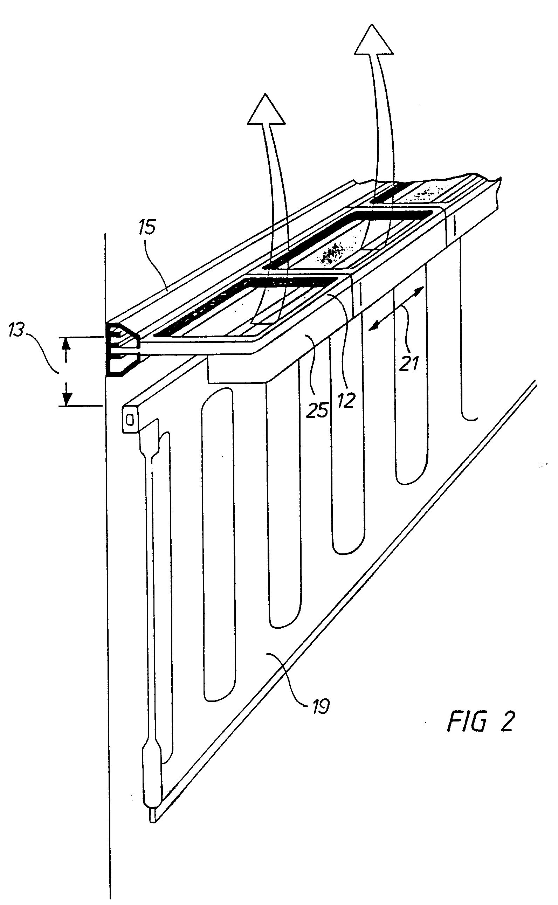

Figur 2 zeigt schematisiert die Filterplatten 12 in Montage vor einem Plattenheizkörper 19.

Aus konstruktiven Gründen wird es hierbei vermieden, daß eine durchgehende Filtermatte verwendet wird, die sich über die gesamte Länge des Heizkörpers erstreckt. Erfindungsgemäss ist diese Filtermatte in einzelne Filterelemente (Module) aufgeteilt, und jedes Filterelement bildet eine Filterplatte 12, wobei jede Filterplatte aus einem Rahmenelement und dem Filter selbst besteht in verschiedenen Formaten.

Der Filter wird mit einem Klemmgummi im Rahmenteil festgeklemmt. Im gezeigten Ausführungsbeispiel ist das Rahmenteil 20 rechteckförmig ausgebildet, um die bestmögliche Abdeckung des Plattenheizkörpers 19 zu gewährleisten. Dadurch ergibt sich eine strömungsschlüssige Abdeckung des Plattenheizkörpers 19.

Wichtig ist, daß der Abstand 13 der Befestigungsschiene 15 zum Plattenheizkörper 19 wählbar ist und den entsprechenden Erfordernissen am Einbauort angepasst werden kann, um den jeweils wünschenswerten Filtereffekt zu erreichen.

Ferner ist wichtig, daß die Filterplatten 12 in den Pfeilrichtungen 21 verschiebbar in der Befestigungsschiene gehalten sind oder aneinanderreihbar sind, so daß eine stufenlose und lückenlose Abdeckung der luftabgebenden Fläche des Plattenheizkörpers gewährleistet ist.

Hierbei kann es vorgesehen sein, daß in dem jeweils aufeinanderfolgenden Rahmenteil unterschiedliche Filtermaterialien angeordnet sind. Diese Anordnung unterschiedlicher Filtermaterialien ist z.B. vorteilhaft, wenn es um den Einsatz von Chemikalien bzw. deren Dosierung für das Raumluftvolumen geht. Man kann dann einzelnen Filterelementen Chemikalien in bestimmter Dosierung zuordnen und anderen Filterelementen nicht, so daß auch hier wieder in variabler Weise die passierenden Luftströme behandelt werden können.

Bei allen Ausführungsformen ist wichtig, daß die Filterelemente nicht nur in einer im wesentlichen horizontalen Ebene über der luftabgebenden Fläche angeordnet sein können, sondern daß im Winkel zu dieser Ebene der erstgenannten Filterelemente noch weitere Filterelemente angeordnet sein können.

Beim Ausführungsbeispiel der Figur 2 ist es deshalb möglich, daß parallel zur Ebene des Plattenheizkörpers 19 im luftschlüssigen Abschluß zu den horizontalen Filterplatten 12 senkrecht dazu eine weitere Filterplattenanordnung vorgesehen ist, die mit einem Stativ gehaltert ist und vor dem Plattenheizkörper 19 gestellt ist.

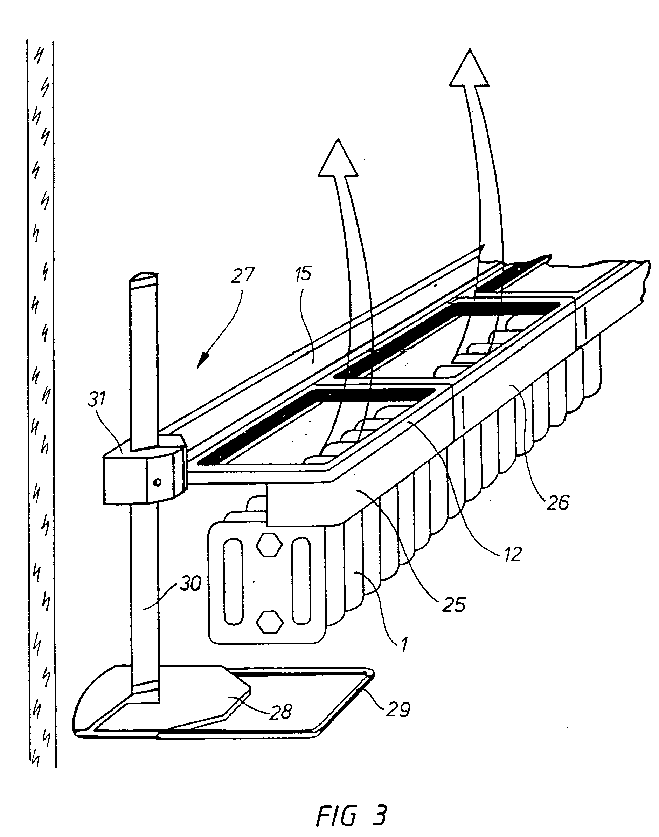

Die Figur 3 zeigt ein abgewandeltes Ausführungsbeispiel zu Figur 2. Es handelt sich hierbei um einen Konvektionsheizkörper, über dem in ähnlicher Weise wie in Figur 2 gezeichnet, die Filterplatten angeordnet sind.

Es wird hierbei ein Stativ 27 verwendet, welches im wesentlichen aus einem Fußteil 28 besteht, dessen Standfläche noch über einen größeren Rahmen 29, der mit dem Fußteil 28 verbunden ist, vergrößert werden kann.

Am Fußteil 28 ist ein Halterohr 30 angeordnet, auf dem höhenverstellbar ein Halter 31 sitzt, der mit der Befestigungsschiene 15 verbunden ist.

Durch Einstellung des Halters 31 auf dem Halterohr 30 kann somit jede beliebige Höhe (im Rahmen der baulichen Gegebenheiten) über dem Heizkörper 1 für die Filterplatten 12 eingestellt werden.

Auch hier ist als Ausführungsbeispiel dargestellt, daß mittlere, gerade Leitblenden 26 vorhanden sind und an den Randseiten jeweils abgebogene Leitblenden 25 lösbar an den Filterplatten 12 angebracht sind.

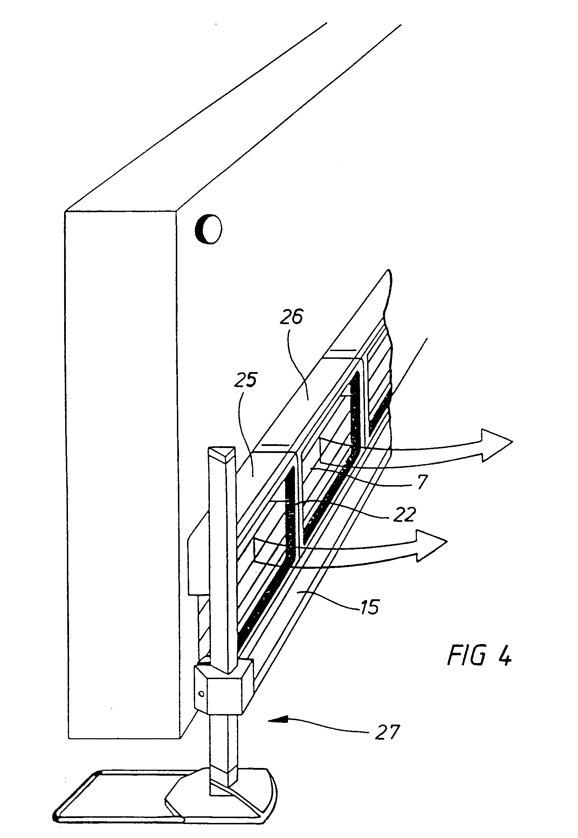

Figur 4 zeigt eine Luftkonvektionieranlage, die entweder als Luftklimaanlage (Kühlung oder Heizung) oder als Befeuchtungsanlage ausgebildet sein kann.

Hierbei ist wichtung, daß vor der Ausströmöffnung 22 im Abstand davor die erfindungsgemässen Filterplatten angeordnet sind.

Es versteht sich vonselbst, daß, wenn noch weitere Ausströmöffnungen vorhanden sein sollten, wie z.B. in der oberen, horizontalen Deckfläche dieses Gerätes, dann auch dort im Abstand über dieser Ausströmfläche entsprechende erfindungsgemässe Filterplatten angeordnet sind.

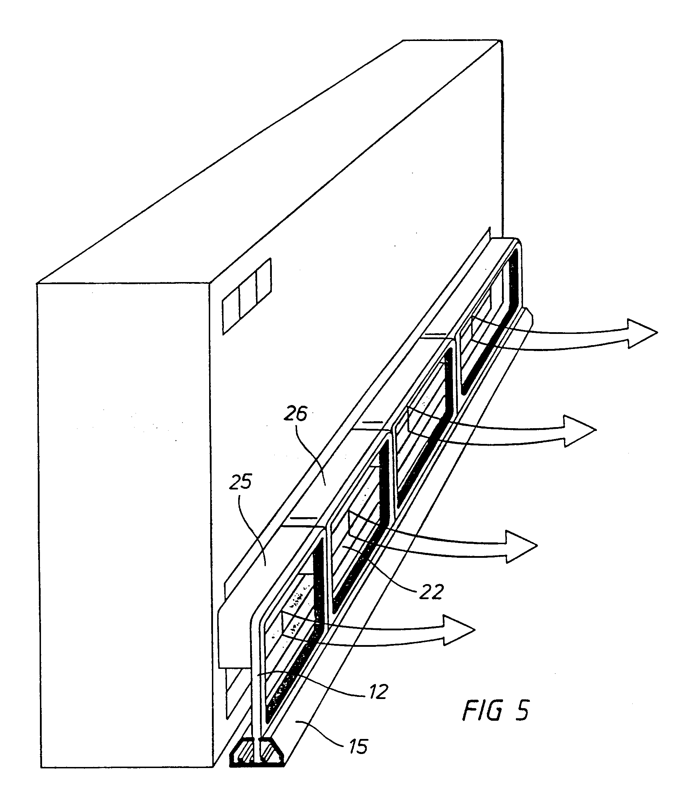

Die Figur 5 zeigt einen Nachstromspeicherofen, wo ebenfalls vor der Ausströmöffnung 22 die erfindungsgemässen Filterplatten im Abstand angeordnet sind.

Hierbei sind die Filterplatten 12 in einer auf dem Boden befestigten Befestigungsschiene 15 angebracht, während bei dem Ausführungsbeispiel nach Figur 4 die Befestigungsschiene 15 an dem Stativ 27 höhenverstellbar befestigt war.

Wie eingangs ausgeführt, eignet sich die vorliegende Erfindung zur Filtration aller Luftströme, die durch Konvektion oder Ventilation erzeugt werden. Aus diesem Grunde ist es erfindungsgemäss auch vorgesehen, die erfindungsgemässen Filterelemente oberhalb der Luftausströmöffnungen, z.B. Fernsehapparaten, Monitoren, Kühlschränken und dergleichen anzubringen. Auch hier kommt es zu dem erwünschten aktiven (ohne Fremdenergie) Luftreinigungseffekt, der vergleichsweise automatisch abläuft.

Darüberhinaus können die erfindungsgemässen Filterelemente auch im Bereich von Öffnungsspalten von Schiebetüren, Kippfenstern und dergleichen angeordnet werden, wo ebenfalls ein (natürlicher) Ventilationsluftstrom besteht. In diesem Falle wird dann die von außen in den Raum eindringende Luft durch die im Luftstrom eingeschalteten Filterplatten gereinigt.

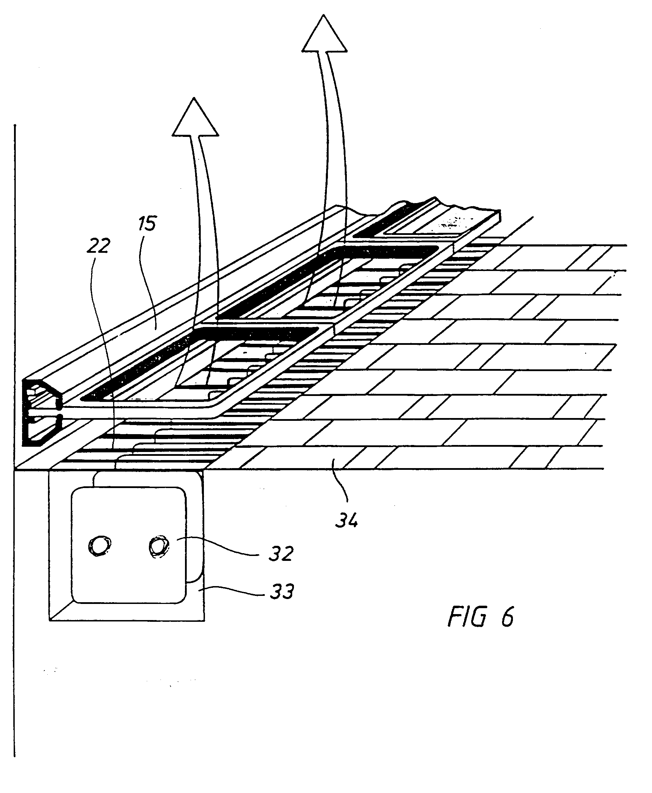

Im Ausführungsbeispiel nach Figur 6 ist dargestellt, daß in einem Fußboden 34 ein Schacht 33 eingelassen ist, in dem ein Konvektor 32 angeordnet ist. Oberhalb der Luftausströmöffnungen 22 sind die erfindungsgemässen Filterplatten 12 angeordnet. Hierbei sind diese - entsprechend der vorherstehenden Beschreibung - in einer an der Wandseite gehaltenen Befestigungsschiene 15 verstellbar gehalten.

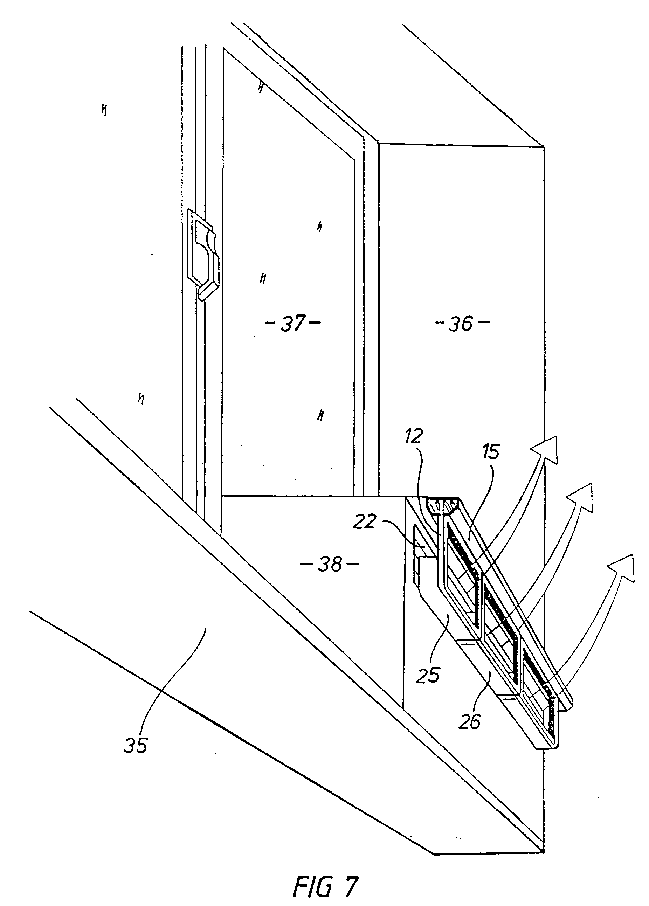

Im Ausführungsbeispiel nach Figur 7 ist in einer Fensternische 36 unterhalb eines Fensters 37 eine Fensterbank 35 angeordnet, auf der ein Luftkonditioniergerät 38 mit Ausströmöffnungen 22 angeordnet ist.

Auch hier sind die Filterplatten 12 an der Befestigungsschiene 15 im Bereich der Fensternische 36 befestigt.

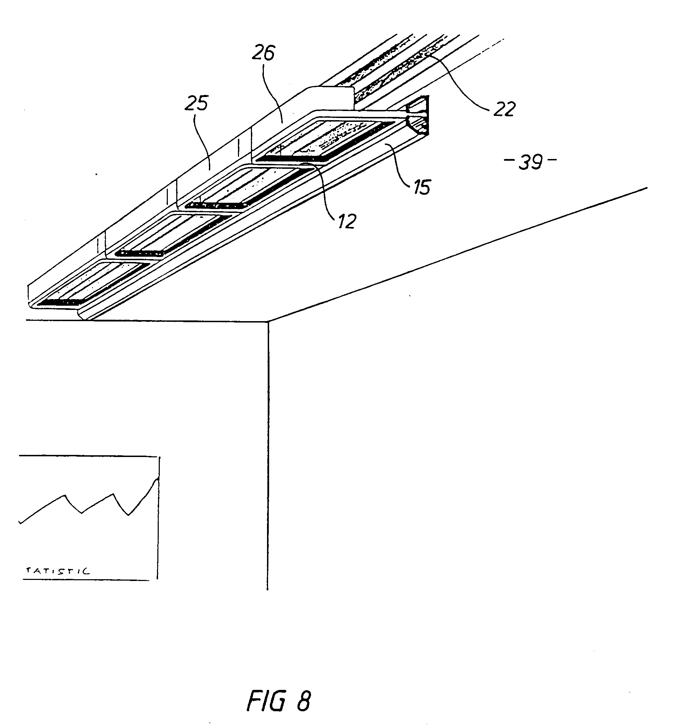

In der Figur 8 sind in der Decke Ausströmöffnungen 22 angeordnet, vor die wiederum mittels der Befestigungsschiene 15 die Filterplatten 12 eingeschaltet sind.

Um bedarfsweise eine Führung des eindringenden Luftstromes zu erreichen, sind die Leitblenden 25,26 vorgesehen, die möglichst dicht an die Decke 39 anschließen sollen.

Zusammenfassend wird mit der Erfindung die Aufgabe gelöst, daß Raum-Luftreinigung aufgrund der Nutzung vorhandener Zirkulations- bzw. Ventilationsströme ohne zusätzliche Energiekosten durchgeführt werden kann. Die Luftfilteranordnung kann hierbei im Sinne einer Luftdurchdringung minimiert bzw. maximiert werden, wobei die Funktionen von Heiz- bzw. Lüftungssystemen berücksichtigt werden.

| ZEICHNUNGS-LEGENDE | | | |
|---|---|---|---|
| 1 | Heizkörper | 31 | Halter |
| 2 | Rückwand | 32 | Konvektor |
| 3 | Vorderwand | 33 | Schacht |
| 4 | Befestigungsfläche | 34 | Fußboden |
| 5 | Pfeilrichtung | 35 | Fensterbank |
| 6 | " | 36 | Fensternische |
| 7 | luftabgebende Fläche | 37 | Fenster |
| 8 | Abstand | 38 | Luftkonditioniergerät |
| 9 | Pfeilrichtung | 39 | Decke |
| 10 | " | | |
| 11 | " | | |
| 12 | Filterplatte | | |
| 13 | Abstand | | |
| 14 | Pfeilrichtung | | |
| 15 | Befestigungsschiene | | |
| 16 | Hohlprofil | | |
| 17 | Filterstreifen | | |
| 18 | Befestigungsnut | | |
| 19 | Plattenheizkörper | | |
| 20 | Rahmenteil | | |
| 21 | Pfeilrichtung | | |
| 22 | Ausströmöffnung | | |
| 23 | Ansatz | | |
| 24 | Luftschacht | | |
| 25 | Leitblende | | |
| 26 | Leitblende | | |
| 27 | Station | | |
| 28 | Fußteil | | |
| 29 | Rahmen | | |
| 30 | Halterohr | | |

## Patentansprüche

1. Luftfilteranordnung für Konvektions- und Ventilationsluftströme, wobei Filterelemente (12,12a,12b) zur Reinigung der Raumluft in die Luftströmung der Konvektionsheizkörper (1,19) beziehungsweise Ventilationselemente eingebracht sind,
**dadurch gekennzeichnet,** daß die Filterelemente (12,12a,12b) im Abstand vor und/oder über den Konvektionsheizkörpern (1,19) bzw. den Ventilationselementen justierbar angeordnet, daß die Fläche der Filterelemente (12,12a,12b) mindestens so groß ist, daß sie die gesamte Querschnittsfläche (7) der erzeugten bzw. abgegebenen Luftströmung erfaßt, daß die wirksame Fläche der Filterelemente (12,12a,12b) der Querschnittsfläche (7) der erzeugten bzw. abgegebenen Luftströmung anpaßbar ist und daß die Filterelemente (12,12a,12b) elektrisch isoliert an einer Befestigungsschiene (15) angeordnet sind.

2. Luftfilteranordnung nach Anspruch 1, **dadurch gekennzeichnet,** daß die Befestigungsschiene (15) Einstellmöglichkeiten für unterschiedliche Winkelstellungen der Filterelemente (12,12a,12b) in Bezug zur Bewegungsrichtung der Luftströmung aufweist.

3. Luftfilteranordnung nach Anspruch 1 und 2, **dadurch gekennzeichnet,** daß die Befestigungsschiene an einem in der Höhe verstellbaren Stativ (27) angeordnet ist.

4. Luftfilteranordnung nach Anspruch 1, **dadurch gekennzeichnet,** daß die Filterelemente (12a) an den Längsseiten einen gegen die Luftströmungsrichtung abgebogenen, nach unten ragenden, Ansatz (23) aufweisen, (Fig. 1a).

5. Luftfilteranordnung nach einem der Ansprüche 1 bis 4 **dadurch gekennzeichnet,** daß die Filterelemente (12b) in konvexer Abbiegung den Konvektionsstrom überdecken.

6. Luftfilteranordnung nach einem der Ansprüche 1 bis 5, **dadurch gekennzeichnet,** daß die Filterelemente (12,12a,12b) einen nach unten weisenden Luftschacht (24) bilden, der durch von den Randseiten der Filterplatten (12) nach unten sich erstreckende Leitblenden (25,26) gebildet wird.

7. Luftfilteranordnung nach einem der Ansprüche 1 bis 6, **dadurch gekennzeichnet,** daß an einer Befestigungsfläche (4) im Bereich eines Nebenluftstromes ein weiteres Filterelement als Adsorptionsstreifen (17) angeordnet ist, (Fig. 1,1c).

8. Luftfilteranordnung nach einem der Ansprüche 1 bis 7, **dadurch gekennzeichnet,** daß die Filterelemente (12,12a,12b) ein Rahmenteil aufweisen, in welches das Filtermaterial eingelegt und mit einem Klemmkeder befestigt wird.

9. Luftfilteranordnung nach einem der Ansprüche 1 bis 8, **dadurch gekennzeichnet,** daß die Filterelemente (12,12a,12b) in überlagerter Anordnung vorgesehen sind, wobei jeweils versetzt die Filterelemente in unterschiedlichem Abstand zur luftabgebenden Fläche (7) angeordnet sind.

10. Luftfilteranordnung nach einem der Ansprüche 1 bis 9, **dadurch gekennzeichnet,** daß die Filterelemente (12,12a,12b) in stückweiser Ausbildung dicht nebeneinander in gleichem Abstand zur luftabgebenden Fläche (7) angeordnet sind.

11. Luftfilteranordnung nach einem der Ansprüche 1 bis 10, **dadurch gekennzeichnet,** daß die Filterelemente (12,12a,12b) in wechselnder Anordnung aus jeweils unterschiedlichem Material vorgesehen sind.

12. Luftfilteranordnung nach einem der Ansprüche 1 bis 11, **dadurch gekennzeichnet,** daß die Filterelemente (12,12a,12b) einen Luftfilterrahmen aufweisen, der in Aneinanderreihung aus einzelnen Rahmenelementen besteht, die die Filterelemente einzeln aufnehmen.

13. Luftfilteranordnung nach einem der Ansprüche 1 bis 12, **dadurch gekennzeichnet,** daß an den Luftfilterrahmen Leitblenden (25,26) über Rastnuten ansetzbar sind.

14. Luftfilteranordnung nach einem der Ansprüche 1 bis 13, **dadurch gekennzeichnet,** daß die Luftfilterelemente (12,12a,12b) mit einem elektrischen Schaltkreis verbunden sind mit dem diese über metallische Filtereinheiten aus Rahmen mit Filter Kontakt zum elektrisch angeschlossenen Halterprofil (15,30,31) aufweisen (Aufladung des Filterelements).

## Claims

1. An air filter arrangement for convection- and ventilation air currents, in which filter elements (12,12a,12b) are introduced into the air current of the convection heating elements (1,19) or ventilation elements, to clean the ambient air, characterised in that the filter elements (12,12a,12b) are adjustably arranged at a distance in front of and/or above the convection heating elements (1,19), or the ventilation elements, that the area of the filter elements (12,12a,12b) is at least so large that it takes up the entire cross-sectional area (7) of the generated or released air stream, that the effective area of the filter elements (12a,12a,12b) is able to be adapted to the cross-sectional area (7) of the generated or emitted air stream and that the filter elements (12a,12a,12b) are arranged so as to be electrically insulated on an attachment rail (15).

2. An air filter arrangement according to Claim 1, characterised in that the attachment rail (15) has possibilities of adjustment for different angular positions of the filter elements (12,12a,12b) in relation to the direction of movement of the air stream.

3. An air filter arrangement according to Claim 1 and 2, characterised in that the attachment rail is arranged on a vertically adjustable stand (27).

4. An air filter arrangement according to Claim 1, characterised in that the filter elements (12a) have on their longitudinal sides an extension (23), projecting downwards and bent towards the direction of the air stream (Fig. 1a).

5. An air filter arrangement according to one of Claims 1 to 4, characterised in that the filter elements (12b) cover the convection current in a convex bend.

6. An air filter arrangement according to one of Claims 1 to 5, characterised in that the filter elements (12,12a,12b) form a downwardly pointing air shaft (24), which is formed by baffles (25,26) extending downward from the marginal sides of the filter plates (12).

7. An air filter arrangement according to one of Claims 1 to 6, characterised in that on an attachment surface (4) in the region of a secondary air current, a further filter element is arranged as adsorption strip (17) (Fig.1,1c).

8. An air filter arrangement according to one of Claims 1 to 7, characterised in that the filter elements (12,12a,12b) have a frame part, in which the filter material is placed and is secured by a clamping strip.

9. An air filter arrangement according to one of Claims 1 to 8, characterised in that the filter elements (12a,12a,12b) are provided in overlapping arrangement, in which in each case the filter elements are arranged so as to be staggered at a different distance from the air-emitting area (7).

10. An air filter arrangement according to one of Claims 1 to 9, characterised in that the filter elements (12a,12a,12b) are arranged in piece-by-piece construction closely adjacent to each other at the same distance from the air-emitting area (7).

11. An air filter arrangement according to one of Claims 1 to 10, characterised in that the filter elements (12,12a,12b) are provided in alternating arrangement made in each case from different material.

12. An air filter arrangement according to one of Claims 1 to 11, characterised in that the filter elements (12,12a,12b) have an air filter frame, which consists of individual frame elements arranged one after another, which hold the filter elements individually.

13. An air filter arrangement according to one of Claims 1 to 12, characterised in that baffles (25,26) are able to be fixed onto the air filter frame by means of detent grooves.

14. An air filter arrangement according to one of Claims 1 to 13, characterised in that the air filter elements (12,12a,12b) are connected with an electrical switching circuit, with which these have contact to the electrically connected holder section (15,30,31) by means of metallic filter units of frame with filter (charging of the filter element).

## Revendications

1. Dispositif de filtre à air conçu pour les courants d'air de convection et de ventilation, sur lequel les éléments filtrants (12, 12a, 12b) sont respectivement installés dans le courant d'air du radiateur à convection (1, 19) ou dans celui des éléments de ventilation, afin de purifier l'air ambiant,
caractérisé en ce que les éléments filtrants (12, 12a, 12b) sont posés de manière réglable, à une certaine distance de l'avant et/ou du dessus des radiateurs à convection (1, 19) ou des éléments de ventilation, de telle sorte que la surface des éléments filtrants (12, 12a, 12b) ait au moins une taille suffisante pour englober toute l'aire de la section (7) du courant d'air créé ou diffusé, en ce que la surface active des éléments filtrants (12, 12a, 12b) soit adaptable à l'aire de la section (7) du courant d'air créé ou diffusé, et en ce que les éléments filtrants (12, 12a, 12b) soient fixés sur un rail de fixation (15) de manière à être isolés électriquement.

2. Dispositif de filtre à air selon la revendication 1, caractérisé en ce que le rail de fixation (15) dispose de possibilités de réglage sur différentes positions angulaires des éléments filtrants (12, 12a, 12b) par rapport au sens du déplacement du courant d'air.

3. Dispositif de filtre à air selon les revendications 1 et 2, caractérisé en ce que le rail de fixation (15) est installé sur un support (27) réglable en hauteur.

4. Dispositif de filtre à air selon la revendication 1, caractérisé en ce que les éléments filtrants (12a) présentent sur les côtés latéraux un rebord (23) recourbé dans le sens du courant d'air et en saillie vers le bas (Fig. 1a).

5. Dispositif de filtre à air selon l'une des revendications 1 à 4, caractérisé en ce que les éléments filtrants (12b) chevauchent le courant de convection par un recourbement convexe.

6. Dispositif de filtre à air selon l'une des revendications 1 à 5, caractérisé en ce que les éléments filtrants (12, 12a, 12b) constituent un puits d'aération (24), orienté vers le bas qui est réalisé par des panneaux de guidage (25, 26) qui s'étendent vers le bas, et qui est formé par les côtés latéraux des plaques du filtre.

7. Dispositif de filtre à air selon l'une des revendications 1 à 6, caractérisé en ce que sur une surface de fixation (4), dans la zone d'un courant d'air additionnel, un élément filtrant supplémentaire est installé comme bande d'adsorption (17) (fig. 1, 1c).

8. Dispositif de filtre à air selon l'une des revendications 1 à 7, caractérisé en ce que les éléments filtrants (12, 12a, 12b) comportent un élément de cadre dans lequel le matériau filtrant est posé et fixé avec un cadre de serrage.

9. Dispositif de filtre à air selon l'une des revendications 1 à 8, caractérisé en ce que les éléments filtrants (12, 12a, 12b) sont conçus pour une disposition superposée, les éléments filtrants étant installés avec un décalage successif, à une distance variable de la surface diffusant de l'air (7).

10. Dispositif de filtre à air selon l'une des revendications 1 à 9, caractérisé en ce que les éléments filtrants (12, 12a, 12b) sont disposés côte à côte et tout près l'un de l'autre, à égale distance de la surface diffusant de l'air (7).

11. Dispositif de filtre à air selon l'une des revendications 1 à 10, caractérisé en ce que les éléments filtrants (12, 12a, 12b) sont réalisés dans deux matériaux qui alternent de filtre à filtre.

12. Dispositif de filtre à air selon l'une des revendications 1 à 11, caractérisé en ce que les éléments filtrants (12, 12a, 12b) comportent un cadre de filtre à air qui est composé d'éléments de cadre individuels placés l'un à côté de l'autre et sur lesquels les éléments filtrants sont installés individuellement.

13. Dispositif de filtre à air selon l'une des revendications 1 à 12, caractérisé en ce que des panneaux de guidage (25, 26) peuvent être montés sur le cadre de filtre à air par le biais de rainures d'arrêt.

14. Dispositif de filtre à air selon l'une des revendications 1 à 13, caractérisé en ce que les éléments filtrants (12, 12a, 12b) sont reliés à un circuit de commutation électrique par lequel ceux-ci sont en contact avec le profilé d'appui (15, 30, 31) sous tension électrique, par l'intermédiaire d'unités filtrantes métalliques (charge de l'élément filtrant).
